Europäisches Patentamt

European Patent Office

Office européen des brevets

(19)

(11) Numéro de publication: **0 237 828 B1**

(12) **FASCICULE DE BREVET EUROPEEN**

(45) Date de publication de fascicule du brevet:
**27.12.91**

(51) Int. Cl.⁵: **H01M 10/50, H01M 10/39**

(21) Numéro de dépôt: **87102426.1**

(22) Date de dépôt: **20.02.87**

(54) **Batterie d'accumulateurs sodium-soufre pour applications spatiales.**

(30) Priorité: **21.02.86 FR 8602408**

(43) Date de publication de la demande:
**23.09.87 Bulletin 87/39**

(45) Mention de la délivrance du brevet:
**27.12.91 Bulletin 91/52**

(84) Etats contractants désignés:
**AT BE CH DE ES FR GB GR IT LI LU NL SE**

(56) Documents cités:
**EP-A- 0 109 543**
**EP-A- 0 144 747**
**FR-A- 1 061 240**
**US-A- 3 823 037**

**PATENT ABSTRACTS OF JAPAN, vol. 8, no.
206 (E-267) [1643], 20 septembre 1984; & JP-
A-59 91 658**

**PATENT ABSTRACTS OF JAPAN, vol. 10, no.
293 (E-443) [2349], 4 octobre 1986; & JP-A-61
110 973**

(73) Titulaire: **ALCATEL ALSTHOM COMPAGNIE
GENERALE D'ELECTRICITE
54, rue La Boétie
F-75382 Paris Cédex 08(FR)**

(72) Inventeur: **Duperray, Gérard
2, rue Pasteur La Norville
F-91290 Arpajon(FR)**
Inventeur: **Richard, François
27 Résidence Bois du Roi
F-91940 Les Ulis(FR)**

(74) Mandataire: **Weinmiller, Jürgen et al
Lennéstrasse 9 Postfach 24
W-8133 Feldafing(DE)**

Rank Xerox (UK) Business Services

## Description

La présente invention concerne une batterie d'accumulateurs sodium-soufre pour applications spatiales.

Ces accumulateurs présentent un grand intérêt dans ce genre d'applications car ils possèdent une grande énergie spécifique et sont complètement hermétiques.

Ils fonctionnent entre 290°C et 380°C. Comme ils sont le siège, aussi bien en charge qu'en décharge, d'une émission thermique dépendant sensiblement linéairement du courant qui les traverse, il est nécessaire de réguler leur température afin qu'elle reste entre les limites précitées.

Différentes solutions ont déjà été proposées pour réguler la température de ces batteries.

On peut utiliser un dispositif de régulation à gaz dans lequel la circulation du gaz, généralement de l'air, draine les calories vers l'extérieur grâce à un échangeur air/air ou en admettant de l'air froid et en évacuant de l'air chaud dans un rapport qui est fonction de la puissance à dissiper.

On connaît également des dispositifs de régulation à liquide où l'on met à profit la chaleur latente de vaporisation ; la vapeur formée en absorbant des calories est recondensée dans un échangeur à air ambiant.

On peut également utiliser un procédé de régulation mettant en oeuvre un fluide réfrigérant à l'état hypercritique.

Le premier type de dispositif conduit à un poids plus faible que le deuxième type, mais il est moins efficace contre la formation des points chauds. Le deuxième type de dispositif présente un volume plus faible, mais aucun des trois types de dispositif n'est susceptible d'être retenu pour des raisons de poids et d'encombrement dans des applications spatiales.

La présente invention a pour but de résoudre le problème de la régulation thermique d'une batterie sodium-soufre pour lesdites applications.

La présente invention a pour objet une batterie d'accumulateurs sodium-soufre pour applications spatiales comportant une pluralité d'accumulateurs cylindriques juxtaposés, dont une base porte une borne d'une première polarité et le conteneur constitue une borne d'une seconde polarité, connectés électriquement par des plaques métalliques au niveau desdites bases et desdits conteneurs, caractérisée par le fait qu'elle comporte un dispositif de régulation thermique comprenant :

- une enceinte calorifugée sensiblement parallélépipédique dont une paroi présente une large ouverture,
- des plaquettes en matériau conducteur thermique en contact thermique, par un isolant électrique interposé, d'une part avec lesdits conteneurs et d'autre part avec un radiateur commun à tous les accumulateurs, et fermant ladite ouverture de l'enceinte calorifugée,
- des résistances chauffantes interposées entre les accumulateurs, susceptibles d'être alimentées par une source extérieure à la batterie, et asservies à la température intérieure de l'enceinte,

les dimensions et la nature dudit radiateur ainsi que l'asservissement de l'alimentation desdites résistances étant tels que l'on maintienne la température de la batterie entre deux températures extrêmes de 290 et 380°C, et de préférence 300 et 350°C.

De préférence, on utilise pour l'enceinte calorifugée des parois super-isolantes d'épaisseur 3cm environ, pouvant être constituées de billes de verre compactées où règne le vide.

Les plaquettes en matériau conducteur thermique peuvent être en cuivre, en argent, en magnésium, mais de préférence en aluminium.

L'isolant électrique interposé est de préférence en mica ; il peut être également en polyimine, ou en paraphénylène-quinoxaline.

D'autres caractéristiques et avantages de la présente invention apparaîtront au cours de la description suivante de modes de réalisation donnés à titre illustratif mais nullement limitatif. Dans le dessin annexé :

- La figure 1 est une vue schématique en coupe d'un accumulateur sodium-soufre appartenant à une batterie selon l'invention.
- La figure 2 est une vue extérieure très schématique d'une batterie selon l'invention.
- La figure 3 est une vue schématique partielle en perspective de la batterie de la figure 2.
- La figure 4 est un diagramme illustrant le bilan thermique correspondant à une charge-décharge de la batterie de la figure 2.
- La figure 5 est un diagramme illustrant le bilan thermique correspondant à une charge-décharge d'une batterie selon l'invention montée dans un satellite géostationnaire.

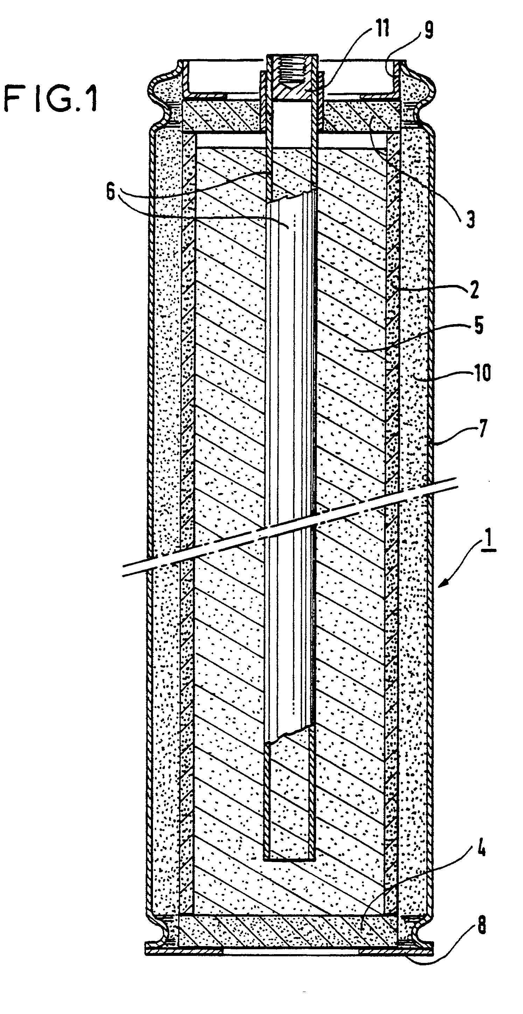

L'accumulateur 1 visible dans la figure 1 comporte un cylindre 2 en alumine béta seconde ouvert à ses deux extrémités ; il est fermé à son extrémité supérieure par un disque 3 en alumine alpha et à son extrémité inférieure par un disque 4 en alumine alpha. L'étanchéité des liaisons est obtenue par des scellements au verre ou par thermocompression d'aluminium. Le réservoir ainsi formé est destiné à recevoir du sodium liquide 5 imprégné dans des mèches à sodium. Le disque 3 comporte un alésage central pour une canalisation métallique de remplissage 6 qui sert également de collecteur de courant négatif. L'extrémité de la canalisation 6 est fermée par une capsule 11 creuse, filetée intérieurement, destinée à recevoir la vis de fixation d'une connexion électrique.

Le conteneur positif 7 servant d'enveloppe à l'accumulateur et de borne positive, est constitué par un cylindre d'acier doux chromisé relié de manière étanche aux deux disques 3 et 4 par des pièces métalliques annulaires 8 et 9 scellées par thermocompression. Le conteneur 7 contient du soufre 10.

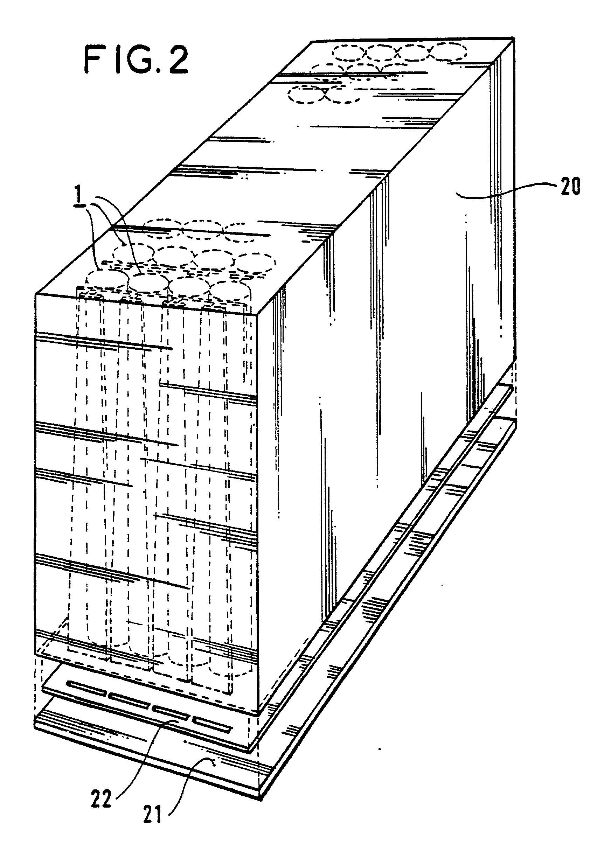

On voit dans la vue très schématique de la figure 2, une batterie d'accumulateurs 1 juxtaposés de manière à former un module parallélépipédique. Ce module est logé dans une enceinte calorifugée 20 à cinq parois, la base de cette enceinte étant fermée par un radiateur plan métallique 21. Les bases inférieures des accumulateurs 1 et le radiateur 21 sont isolées électriquement et thermiquement par une feuille 22.

Les parois de l'enceinte 20 sont en matériau super-isolant pouvant être constitué de billes de verre creuses compactées où règne le vide ; leur épaisseur est de l'ordre de 3 centimètres.

Le radiateur plan 21 est de préférence en aluminium anodisé noir et présente un excellent coefficient d'émission.

La feuille en isolant électrique 22 est de préférence en mica. Les isolants électriques jouent également un rôle d'isolant thermique pour les bases des conteneurs afin d'éviter que le refroidissement soit trop important à ce niveau.

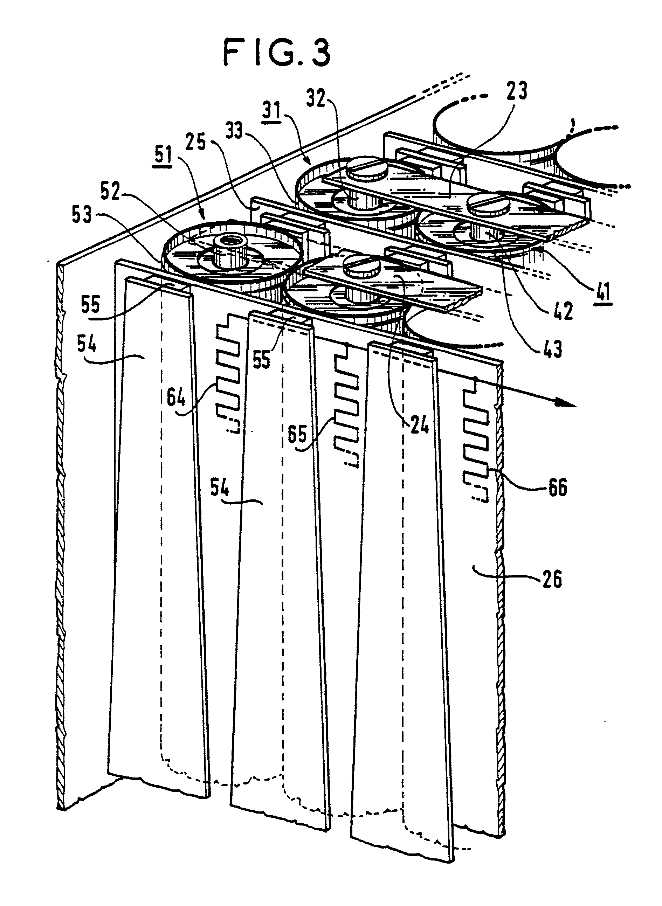

On a représenté dans la figure 3 des accumulateurs 1 de la figure 2 référencés 31, 41 et 51. Leurs bases supérieures portent des bornes négatives 32, 42, 52, reliées par des connexions métalliques 23, 24. Leurs conteneurs positifs 33, 43, 53 sont reliés électriquement par des plaques métalliques minces 25, 26.

Pour la mise en série, on relie les connexions négatives 24 aux connexions positives 25 etc. La plaque métallique 26 est reliée à la sortie positive de la batterie, tandis qu'à l'autre extrémité de la batterie, le dernier groupe de bornes négatives des éléments est relié à la sortie négative de la batterie.

A chaque accumulateur, tel que l'accumulateur 51, est associée une plaquette en aluminium 54 de forme trapézoïdale, faisant toute la hauteur de l'accumulateur et plus large en bas qu'en haut. Pour une hauteur de 230 mm, la largeur de la plaquette d'aluminium passe par exemple de 10 mm à 20 mm. Cette plaquette traverse la feuille isolante 22, et est reliée, par exemple par soudure, au radiateur 21 qui lui-même est isolé électriquement des plaques métalliques 25, 26. Une plaquette 55 en matériau isolant électrique, tel que le mica, est interposée entre les collecteurs positifs tels que 25, 26 et les plaquettes 54 ; elle joue également un rôle thermique car elle permet d'éviter les points chauds.

Les calories émises par les accumulateurs sont donc recueillies le long des parois de chacun de leurs conteneurs par les plaquettes 54 et drainées vers le radiateur 21 qui les transfère au milieu extérieur.

Le dispositif de régulation selon l'invention comporte en outre des résistances chauffantes 64, 65, 66, plaquées sur la plaque métallique de connexion 26 et alimentées par une source extérieure, par exemple, un panneau solaire. Cette alimentation est asservie à la température des accumulateurs qui ne peuvent fonctionner qu'entre 290° C et 380° C. En outre, ces résistances servent au chauffage initial de la batterie.

L'ensemble formé par les accumulateurs et leurs accessoires de régulation peut être aisément immobilisé dans l'enceinte calorifugée.

Exemple : une batterie selon l'invention de 1,6 Kwh comprend soixante accumulateurs sodium-soufre de capacité nominale 12 Ah regroupés en quinze rangées de quatre accumulateurs en parallèle ; le volume du module est 6,9 dm³. Le poids total de la batterie et de son système de régulation thermique est de 14,6 kg conduisant à une énergie massique de 88 Wh/Kg et une énergie volumique de 106 Wh/dm³.

Dans un premier mode d'utilisation, cette batterie est mise dans un satellite d'observation, ou une navette, à orbite basse. Elle fonctionne en permanence. Chaque cycle correspond à une rotation autour de la terre et comporte une charge d'une heure à 40 ampères et une décharge de 40 minutes à 60 ampères. La tension thermoneutre étant en moyenne, pour l'application considérée de 32,6 Volts, la puissance moyenne à dissiper est de 48 watts pendant la charge et de 324 watts pendant la décharge.

Le radiateur de surface constante est à une température moyenne voisine de 600 K. Il dissipe en permanence 160 watts.

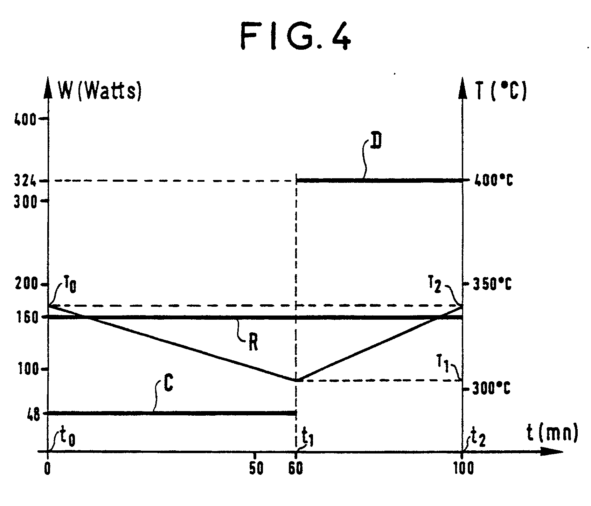

Si on se réfère au diagramme de la figure 4, on a représenté en abscisses le temps t correspondant à un cycle ; $t_0$ correspond au début de la charge, $t_1$ à la fin de la charge et au début de la décharge, et $t_2$ à la fin de la décharge. En ordonnées on a une échelle W en watts indiquant la puissance dissipée, et une échelle de température T en degrés Celsius.

Pendant la charge correspondant à une phase d'ensoleillement du panneau solaire, les résistances de régulation peuvent donc être alimentées de façon à empêcher que la température de la batterie ne descende au dessous de la valeur limite de 290° C. Cependant cette intervention n'est nécessaire qu'en cas de déviation accidentelle due, par exemple, à un changement de régime. Pour l'utilisation au régime nominal, le cycle thermique est auto-équilibré et stable dans le temps.

Entre $t_0$ et $t_1$ pendant la charge, le radiateur émet sensiblement 160 watts (courbe R) et la batterie dissipe 48 watts (courbe C). Le déficit de 112 W est alors prélevé aux constituants de la batterie dont la capacité thermique totale est de 13440 J/°C, ce qui a pour conséquence de faire passer la température de 340°C à 310°C.

Entre $t_1$ et $t_2$, pendant la décharge, les résistances ne fonction nent pas. Le radiateur émet toujours 160 watts, la batterie dissipe 324 watts (courbe D) ; l'excédent de 164 W provoque cette fois une élévation de la température de la batterie de 30°C après 40 minutes, ramenant ainsi le cycle thermique à son point de départ.

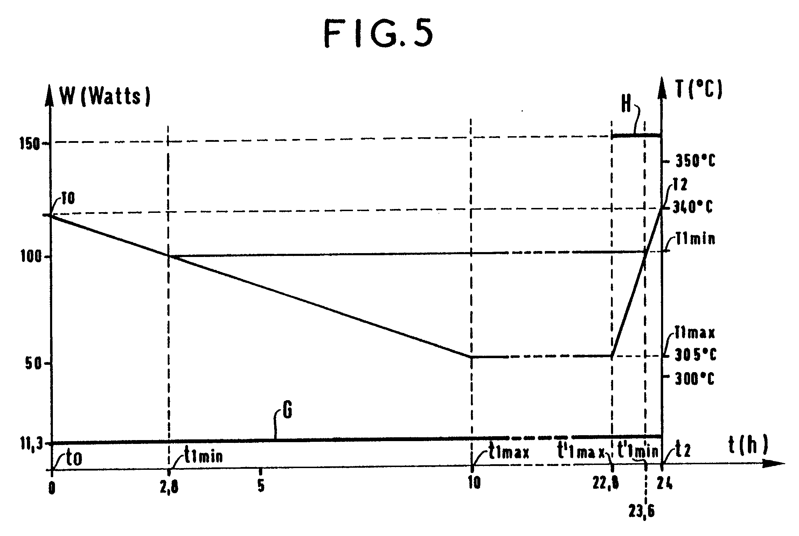

On va décrire maintenant un autre mode d'utilisation d'une telle batterie dans un satellite géostationnaire (figure 5).

En période d'éclipse, le cycle complet de fonctionnement dure 24 heures.

La période de charge entre $t_0$ et $t_1$ dure au minimum 2,8 heures ($t_0$ à $t_1$ min), et au maximum 10 heures ($t_0$ à $t_1$ max).

La période de charge est suivie par une période de repos ($t_1$ min à $t'_1$ min) dans le premier cas, et ($t_1$ max à $t'_1$ max) dans le deuxième cas. La période de décharge dure au minimum 21 minutes ($t'_1$ min à $t_2$), et au maximum 1 heure 12 minutes ($t'_1$ max à $t_2$).

Le radiateur est choisi de manière à dissiper constamment 11,3 watts (courbe G).

Au départ $t_0$, la batterie doit avoir la température $T_0 = 340°$, elle se charge très lentement et dissipe une énergie quasiment nulle. Les résistances de régulation fonctionnent de telle manière que la température $T_1$ ($T_1$ min, $T_1$ max) en fin de charge ne soit pas inférieure à 305°C. Il en est de même pendant la période de repos.

Pendant la décharge, la batterie dissipe environ 150 watts (courbe H); en fin de décharge sa température $T_2$ est de l'ordre de 340°C.

Quel que soit son mode d'utilisation, une batterie selon l'invention présente de nombreux avantages. Elle ne comporte aucun dispositif en mouvement. Elle est très compacte car il n'est pas nécessaire de prévoir de l'espace pour une circulation forcée de gaz refroidisseur ou la convection de liquide vaporisé.

Par ailleurs l'échange des calories vers l'extérieur se fait très simplement à l'aide d'un seul radiateur plan, remplaçant une paroi de l'enceinte calorifugée.

La température de fonctionnement ($\approx 600$ K) des accumulateurs sodium-soufre est extrêmement favorable par rapport à celle des autres générateurs, tels que les piles à combustible, ou les accumulateurs nickel-cadmium qui fonctionnent vers 300 K ; en effet l'énergie émise par le radiateur étant proportionnelle à $T^4$ (K), il est possible de diviser la surface de ce radiateur par 16 pour obtenir la même régulation de température.

Enfin, le dispositif prévu par l'invention se présente sous forme modulaire, ce qui permet de réaliser aisément différents types de batteries répondant à des spécifications variées. Pour les batteries traditionnelles au contraire, il est nécessaire de concevoir un type pour chaque spécification.

Bien entendu l'invention n'est limitée aux modes de réalisation décrits et représentés.

## Revendications

1. Batterie d'accumulateurs sodium-soufre pour applications spatiales comportant une pluralité d'accumulateurs cylindriques (1), juxtaposés, dont une base porte une borne (32, 42, 52) d'une première polarité et le conteneur (33, 43, 53) constitue une borne d'une seconde polarité, pouvant être connectées en série-parallèle, caractérisée par le fait qu'elle comporte un dispositif de régulation thermique comprenant :
   - une enceinte calorifugée (20) sensiblement parallélépipédique dont une paroi présente une large ouverture,
   - des plaquettes (54) en matériau conducteur thermique en contact thermique, par un isolant électrique interposé (55), d'une part avec lesdits conteneurs (33, 43, 53) et d'autre part avec un radiateur commun (21) à tous les accumulateurs, situé au niveau du fond desdits conteneurs et fermant ladite ouverture de l'enceinte calorifugée (20),
   - des résistances chauffantes (64, 65, 66) interposées entre les accumulateurs, susceptibles d'être alimentées par une source extérieure à la batterie, et asservies à la température intérieure de l'enceinte, les dimensions et la nature dudit radiateur ainsi que l'asservissement de l'alimentation desdites résistances étant tels que la température de la batterie soit maintenue entre deux températures extrêmes 290°C et 380°C.

2. Batterie selon la revendication 1, caractérisée par le fait que les parois de ladite enceinte calorifugée (20) sont en matériau super-isolant.

3. Batterie selon la revendication 1, caractérisée par le fait que lesdites plaquettes (54) en matériau conducteur thermique sont choisies en cuivre, en argent, en aluminium ou en magnésium.

4. Batterie selon la revendication 1, caractérisée par le fait que ledit isolant électrique interposé (55) est constitué par une feuille en mica, en polyimine ou en paraphénylène-quinoxaline.

5. Batterie selon la revendication 1, caractérisée par le fait que ledit radiateur (21) est un panneau d'aluminium anodisé noir.

6. Batterie selon la revendication 3, caractérisée par le fait que lesdites plaquettes (54) sont sensiblement trapézoïdales, leur côté voisin dudit radiateur étant le plus large.

7. Batterie d'accumuleurs selon la revendication 1, caractérisée par le fait que l'intervalle de températures est 300°C-350°C.

## Claims

1. A battery of sodium-sulfur storage cells for space applications, comprising a plurality of juxtaposed cylindrical storage cells (1), one base of said battery carrying a terminal (32, 42, 52) of a first polarity and the container (33, 43, 53) of said battery constituting a terminal of a second polarity, said terminals being suitable for connecting in series-parallel; said battery being characterised in that it includes a thermal regulation device comprising:

a substantially rectangular heat-insulated enclosure (20), one of whose walls presents a wide opening;

fins (54) made of thermally conductive material in thermal contact with said containers (33, 43, 53) via interposed electrical insulators, and with a radiator (21) common to all of the storage cells and situated at the bottoms of the said containers and closing the said opening in the heat-insulated enclosure (20); and

heating resistors (64, 65, 66) interposed between the storage cells, suitable for being powered by a source eternal to the battery, and servo-controlled to the temperature inside the enclosure, the dimensions and the nature of the said radiator as well as the servo-control of the power to the said resistors being such that the temperature of the battery is maintained in the range defined by two extreme temperatures 290°C and 380°C.

2. A battery according to claim 1, characterised in that the walls of the said heat-insulated enclosure (20) are made of super-insulating material.

3. A battery according to claim 1, characterised in that the said fins (54) are made of a thermally conductive material selected from copper, silver, aluminium and magnesium.

4. A battery according to claim 1, characterised in that said interposed electrical insulation (55) is constituted by a sheet of mica, polyimine, or paraphenylene-quinoxaline.

5. A battery according to claim 1, characterised in that the said radiator (21) is a panel of black anodised aluminium.

6. A battery according to claim 3, characterised in that the said fins (54) are substantially trapezium-shaped, their larger sides being adjacent said radiator.

7. A battery of storage cells according to claim 1, characterised in that the temperature range is 300°C to 350°C.

## Patentansprüche

1. Natrium-Schwefel-Akkumulatorbatterie für Weltraumanwendungen, bestehend aus einer Vielzahl nebeneinanderliegender zylindrischer Akkumulatoren (1), deren Basis eine Klemme (32, 42, 52) einer ersten Polarität trägt, während der Behälter (33, 43, 53) eine Klemme einer zweiten Polarität bildet, und wobei die Klemmen reihenparallel geschaltet werden können, dadurch gekennzeichnet, daß die Batterie eine Wärmeregeleinrichtung besitzt, die aufweist:

- eine im wesentlichen parallelepipedische wärmeisolierende Hülle (20), deren eine Wand eine große Öffnung besitzt,
- Platten (54) aus wärmeleitendem Material, die über ein eingefügtes elektrisch isolierendes Material (55) wärmemäßig in Kontakt zum einen mit den Behältern (33, 43, 53) und zum anderen mit einem allen Akkumulatoren gemeinsamen Wärmestrahler (21) stehen, der am Boden der Behälter angeordnet ist und die Öffnung der wärmeisolierenden Hülle (20) verschließt, und
- Heizwiderstände (64, 65, 66), die zwischen die Akkumulatoren eingefügt sind, durch eine außerhalb der Batterie befindliche Quelle gespeist werden können und auf die Innentemperatur der Hülle eingeregelt sind, wobei die Abmessungen und die Art des Wärmestrahlers sowie die Regelung der Energieversorgung der Widerstände so getroffen sind, daß die Temperatur der Batterie zwischen zwei Grenztemperaturen, nämlich 290°C und 380°C, gehalten wird.

2. Batterie nach Anspruch 1, dadurch gekennzeichnet, daß die Wände der wärmeisolierenden Hülle (20) aus superisolierendem Material
bestehen.

3.  Batterie nach Anspruch 1, dadurch gekennzeichnet, daß die wärmeleitenden Platten (54)
aus Kupfer, Silber, Aluminium oder Magnesium
bestehen.

4.  Batterie nach Anspruch 1, dadurch gekennzeichnet, daß das eingefügte elektrisch isolierende Material (55) aus einer Folie aus Glimmer, Polyimin oder Paraphenylenquinoxalin
besteht.

5.  Batterie nach Anspruch 1, dadurch gekennzeichnet, daß der Wärmestrahler (21) ein
schwarz-anodisiertes Aluminiumpaneel ist.

6.  Batterie nach Anspruch 3, dadurch gekennzeichnet, daß die Platten (54) im wesentlichen
trapezförmig sind, wobei ihre in der Nähe des
Wärmestrahlers befindliche Seite die größte
Seite ist.

7.  Akkumulatorbatterie nach Anspruch 1, dadurch
gekennzeichnet, daß das Temperaturintervall
300° C bis 350° C beträgt.

FIG.1

FIG.2

1

20

22

21

# FIG.3

FIG.4

FIG.5